# EUROPEAN PATENT APPLICATION

(11) **EP 4 546 487 A1**
(43) Date of publication of application: **30.04.2025**
(21) Application number: 23850454.2
(22) Date of filing: 03.08.2023
(51) Int. Cl.: H01M 10/0567, H01M 10/0568, H01M 10/052, H01M 4/58

(54) **SECONDARY BATTERY ELECTROLYTE AND LITHIUM SECONDARY BATTERY COMPRISING SAME**

(30) Priority: 04.08.2022 KR 20220097614; 02.08.2023 KR 20230101238
(71) Applicant: LG Energy Solution, Ltd., Seoul 07335 (KR)
(72) Inventor: AHN, Kyoung Ho, Daejeon 34122 (KR); LEE, Won Tae, Daejeon 34122 (KR); JI, Su Hyeon, Daejeon 34122 (KR); LEE, Jung Min, Daejeon 34122 (KR); HAN, Jun Hyeok, Daejeon 34122 (KR); HAN, Jung Gu, Daejeon 34122 (KR); LEE, Chul Haeng, Daejeon 34122 (KR)
(74) Representative: Hoffmann Eitle
(86) International application number: PCT/KR2023/011404
(87) International publication number: WO 2024/029954

(57) **Abstract**

The present invention relates to a secondary battery electrolyte and a lithium secondary battery comprising same. The lithium secondary battery electrolyte of the present invention comprises: a lithium salt; a non-aqueous organic solvent; and, as an additive, a polymer including a repeating unit derived from a monomer represented by chemical formula 1 and a repeating unit derived from a monomer represented by chemical formula 2.

## Description

### TECHNICAL FIELD

### Cross-reference to Related Applications

This application claims priority from Korean Patent Application No. 10-2022-0097614, filed on August 4, 2022, and Korean Patent Application No. 10-2023-0101238, filed on August 2, 2023, all the disclosures of which are incorporated by reference herein.

### Technical Field

The present disclosure relates to an electrolyte for secondary battery and a lithium secondary battery comprising the same. More specifically, the present disclosure relates to an electrolyte for a secondary battery capable of suppressing the elution of transition metals by forming a polymer film on the electrode surface, and to a lithium secondary battery comprising the same.

### BACKGROUND ART

Recently, there is a growing demand for high-performance, high-stability secondary batteries as electric, electronic, communication, and computer industries have rapidly developed. Particularly, thin-film and miniaturized lithium secondary batteries, as core components in this field, are required in line with miniaturization and lightweight trends of electronic and communication devices.

A liquid electrolyte, e.g., an ion conductive organic liquid electrolyte, in which a salt is dissolved in an organic solvent using a carbonate organic solvent as the main solvent, has been widely used as the electrolyte for a lithium secondary battery. However, such a liquid electrolyte has disadvantages in that it is not only highly susceptible to volatilization of the organic solvent, but also has low stability, as gas is generated inside the battery due to the decomposition of the carbonate organic solvent and/or side reactions between the organic solvent and the electrode during charging and discharging, thereby causing the battery thickness to expand. In particular, this side reaction may be accelerated during storing at high temperatures. Such the continuously generated gas causes an increase in the internal pressure of the battery, thereby causing a phenomenon in which the center of a specific surface of the battery is deformed, for example, a prismatic battery is swollen in a specific direction, etc., or is exploded. This also causes a local difference in the adhesion on the surface of the electrode in the battery, which causes a problem that the electrode reactions do not occur on the entire surface of the electrode in the same manner. Accordingly, in order to ensure the stability of lithium secondary batteries, research has recently been conducted on various additives that can provide various functions to the electrolyte.

The passivation film on the surface of the positive electrode is eroded from repeated charging and discharging processes, moisture inside the cell, Lewis acids, etc., which may degrade the structural stability of the positive electrode as transition metal ions are eluted from the positive electrode. Furthermore, the eluted transition metal ions are electrodeposited on the negative electrode or precipitate from the negative electrode, and reduce the passivation ability of a solid electrolyte interphase (SEI). Thus, there is a problem in that the negative electrode is deteriorated. This deterioration phenomenon of the negative electrode promotes the decomposition of the electrolyte solvent, accelerates gas generation, and causes side reactions such as desorption of the lithium ions inserted into the negative electrode, thereby resulting in a decrease in the battery capacity.

Therefore, there is a need to develop an electrolyte capable of suppressing the elution of transition metals by forming a stable film having low interfacial resistance and high ion transfer efficiency while having a stable passivation ability on the positive electrode surface.

### DISCLOSURE OF THE INVENTION

### TECHNICAL PROBLEM

In order to solve the above problem, the present disclosure aims to provide an electrolyte for secondary batteries capable of forming a film having low interface resistance while having a stable passivation ability on the positive electrode surface.

In addition, the present disclosure also aims to provide a lithium secondary battery having improved low-temperature resistance properties as well as high high-temperature durability by including the electrolyte for secondary batteries of the present disclosure.

### TECHNICAL SOLUTION

In order to achieve the above objects, in one embodiment of the present disclosure, it provides an electrolyte for a secondary battery comprising a lithium salt; a non-aqueous organic solvent; and a polymer including a repeating unit derived from a monomer represented by Formula 1 and a repeating unit derived from a monomer represented by Formula 2 as an additive.

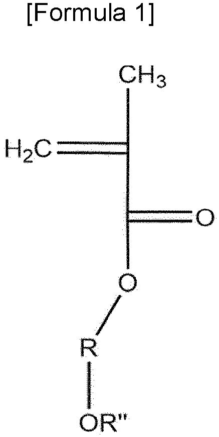

In Formula 1,
R is an alkylene group having 1 to 5 carbon atoms, and R" is H or Li.

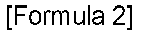

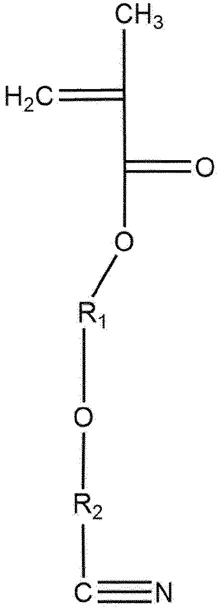

In Formula 2, R₁ and R₂ are each independently an alkylene group having 1 to 5 carbon atoms.

The lithium salt may include LiPF₆, and may further include at least one lithium salt selected from LiCl, LiBr, Lil, LiBF₄, LiClO₄, LiB₁₀Cl₁₀, LiAlCl₄, LiAlO₄, LiCF₃SO₃, LiCH₃CO₂, LiCF₃CO₂, LiAsF₆, LiSbF₆, LiCH₃SO₃, LiTFSI (lithium (bis)trifluoromethanesulfonimide, LiN(SO₂CF₃)₂), LiFSI (Lithium bis(fluorosulfonyl)imide, LiN(SO₂F)₂) or LiBETI (lithium bisperfluoroethanesulfonimide, LiN(SO₂CF₂CF₃)₂.

In Formula 1, R may be an alkylene group having 1 to 4 carbon atoms, and R" may be H. Specifically, R may be an alkylene group having 1 to 3 carbon atoms, and preferably R may be an alkylene group having 1 carbon atom or 2 carbon atoms.

In addition, in Formula 2, R₁ and R₂ may be each independently an alkylene group having 1 to 4 carbon atoms, and specifically, may be an alkylene group having 2 or 3 carbon atoms.

The polymer may further include a repeating unit derived from a monomer represented by Formula 3 below.

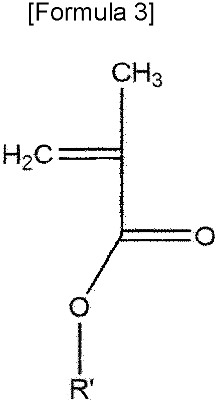

In Formula 3, R' is an alkyl group having 1 to 6 carbon atoms. In Formula 3, R' may be an alkyl group having 1 to 5 carbon atoms, and preferably may be an alkyl group having 1 to 4 carbon atoms.

The polymer may further include a unit represented by Formula 4 below.

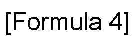

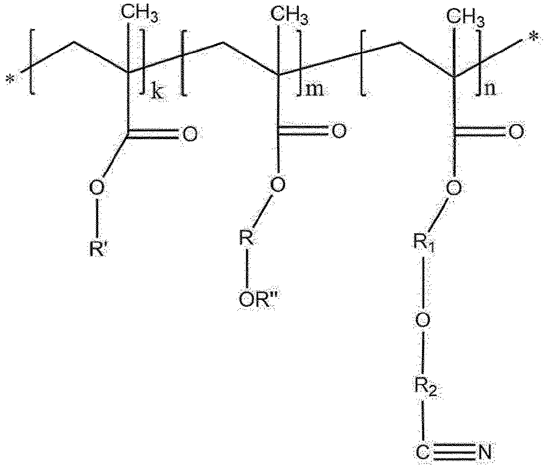

In Formula 4, R, R₁ and R₂ are each independently an alkylene group having 1 to 5 carbon atoms, R' is an alkyl group having 1 to 6 carbon atoms, R" is H or Li, k is an integer of 1 to 15,000, m is an integer of 10 to 12,000, and n is an integer of 10 to 8,500.

According to another embodiment of the present disclosure, the present disclosure provides a lithium secondary battery comprising the electrolyte for a secondary battery of the present disclosure.

### ADVANTAGEOUS EFFECTS

The electrolyte for a secondary battery of the present disclosure may form a film having a stable passivation ability as well as low interface resistance on the surface of the positive electrode by including a polymer containing a cyano group, which is a thermopolymerizable functional group, at its end as an additive. Therefore, a lithium secondary battery comprising the same may achieve the effect of improving the low-temperature resistance property while having superior high-temperature durability.

### MODE FOR CARRYING OUT THE INVENTION

Hereinafter, the present disclosure will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, the expression "*" denotes the same or different atom or a portion connected between ends of a formula, unless explicitly stated otherwise.

Also, in the present specification, the expression "alkylene group" denotes a branched or unbranched divalent saturated hydrocarbon group. In an embodiment, the alkylene group may be substituted or unsubstituted. The alkylene group includes a methylene group, an ethylene group, a propylene group, an isopropylene group, a butylene group, an isobutylene group, a tert-butylene group, a pentylene group, and 3-pentylene group, but the alkylene group is not limited thereto.

Furthermore, in the present specification, the expression "repeating unit" denotes a monomer unit constituting a polymer.

Also, in the present specification, the expression "thermopolymerizable functional group" denotes a functional group capable of performing polymerization between the same functional groups or different functional groups by heating in the absence of a polymerization initiator.

Also, unless otherwise defined in the present specification, the expression "substitution" denotes that at least one hydrogen bonded to carbon is substituted with an element other than hydrogen, for example, an alkyl group having 1 to 5 carbon atoms.

### Electrolyte for Secondary Battery

Specifically, in an embodiment of the present disclosure, it provides an electrolyte for a secondary battery comprising a lithium salt; a non-aqueous organic solvent; and a polymer including a repeating unit derived from a monomer represented by Formula 1 and a repeating unit derived from a monomer represented by Formula 2 as an additive.

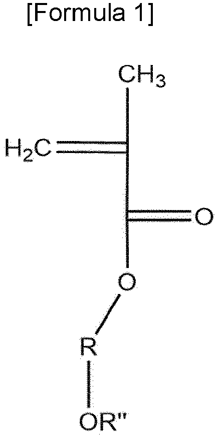

In Formula 1,
R is an alkylene group having 1 to 5 carbon atoms, and R" is H or Li.

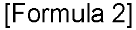

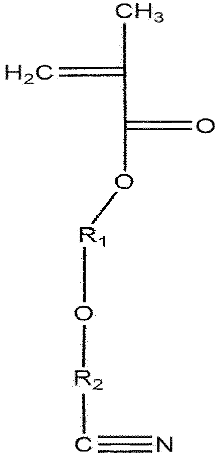

In Formula 2, R₁ and R₂ are each independently an alkylene group having 1 to 5 carbon atoms.

### (1) Lithium Salt

First, the electrolyte for a secondary battery of the present disclosure includes at least one lithium salt.

This lithium salt may be used without limitation as long as it is a compound that can provide lithium ions, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, CF₃SO₃⁻, CH₃CO₂⁻, CF₃CO₂⁻, ASF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, C₆HF₆N⁻ (LiTDI) and SCN⁻as an anion.

Specifically, the lithium salt may include LiPF₆ as a typical example.

In addition, the lithium salt may include LiPF₆ as the first lithium salt, and include at least one selected from LiCl, LiBr, Lil, LiBF₄, LiClO₄, LiB₁₀Cl₁₀, LiAlCl₄, LiAlO₄, LiCF₃SO₃, LiCH₃CO₂, LiCF₃CO₂, LiAsF₆, LiSbF₆, LiCH₃SO₃, LiTFSI (lithium (bis)trifluoromethanesulfonimide, LiN(SO₂CF₃)₂), LiFSI (Lithium bis(fluorosulfonyl)imide, LiN(SO₂F)₂) and LiBETI (lithium bisperfluoroethanesulfonimide, LiN(SO₂CF₂CF₃)₂ excluding LiPF₆, as the second lithium salt.

When two types of the lithium salts are included as the lithium salt, a molar ratio of the first lithium salt and the second lithium salt is 1:0.01 to 1:50, specifically 1:1 to 1:30, more specifically 1:1 to 1:10.

The second lithium salt has an excellent ion-transfer effect, but may generate an amine or alkaline component due to a side reaction with moisture in the battery. Thus, if the molar ratio of the second lithium salt to 1 mol of the first lithium salt is greater than 50, a metallic component, for example, a current collector or a battery case may be corroded by the amine or alkaline component generated due to the side reaction, or a crosslinking reaction rate between the polymers may be reduced during the thermal polymerization.

In the electrolyte for a secondary battery, the total concentration of the lithium salt may be in a range of 0.1 M to 5 M, specifically 0.5 M to 5 M, and more specifically 1 M to 4.5 M. In the case in which the mixing concentration of the total lithium salts in the electrolyte for a secondary battery is less than 0.1 M, since the ionic conductivity of the electrolyte is reduced, the performance of the electrolyte decreases. In the case in which the mixing concentration of the lithium salts is greater than 5 M, the electrolyte impregnability is reduced as the viscosity of the electrolyte increases, and the mobility of the lithium ions may be reduced to degrade the capacity characteristics.

### (2) Non-Aqueous Organic Solvent

Various organic solvents typically used in a lithium electrolyte may be used as the non-aqueous organic solvent without limitation. For example, the organic solvent may include a cyclic carbonate-based organic solvent, a linear carbonate-based organic solvent, or a mixed organic solvent thereof.

The cyclic carbonate-based organic solvent is a highly viscous organic solvent capable of well dissociating the lithium salt in the electrolyte due to high permittivity, wherein specific examples of the cyclic carbonate-based organic solvent may be at least one organic solvent selected from ethylene carbonate (EC), propylene carbonate (PC), 1,2-butylene carbonate, 2,3-butylene carbonate, 1,2-pentylene carbonate, 2,3-pentylene carbonate, or vinylene carbonate, and, among them, the cyclic carbonate-based organic solvent may include at least one of ethylene carbonate or propylene carbonate (PC).

In addition, the linear carbonate-based organic solvent is an organic solvent having low viscosity and low permittivity, wherein typical examples thereof may be at least one organic solvent selected from dimethyl carbonate (DMC), ethyl methyl carbonate (EMC), diethyl carbonate (DEC), dipropyl carbonate, methylpropyl carbonate, or ethylpropyl carbonate, and specially may include at least one of dimethyl carbonate or ethyl methyl carbonate.

Also, in the present disclosure a mixture of the cyclic carbonate-based organic solvent and the linear carbonate-based organic solvent may be included, wherein the cyclic carbonate-based organic solvent and the linear carbonate-based organic solvent may be included in a mixing ratio of 10:90 to 50:50 by volume, and specifically 15:85 to 30:70 by volume to secure high ionic conductivity.

Furthermore, the organic solvent may further include at least one organic solvent of a linear ester-based organic solvent or a cyclic ester-based organic solvent, which have a lower melting point and higher stability at high temperatures than those of the cyclic carbonate-based organic solvent and/or the linear carbonate-based organic solvent, to improve the ionic conductivity of the electrolyte. Specifically, the organic solvent may further include a linear ester-based organic solvent which may reduce the viscosity of the electrolyte for a secondary battery and may simultaneously increase a dissociation degree of the lithium salt by chelating lithium cations by an ether symmetric structure. **In** a case in which the linear ester-based solvent is further used, the ionic conductivity of the electrolyte for a secondary battery may be further improved.

Any one selected from methyl acetate, ethyl acetate, propyl acetate, methyl propionate, ethyl propionate, propyl propionate, or butyl propionate or a mixture of two or more thereof may be typically used as the linear ester-based organic solvent, but the linear ester-based organic solvent is not limited thereto.

Also, the cyclic ester-based organic solvent may include at least one organic solvent selected from γ-butyrolactone, γ-valerolactone, γ-caprolactone, σ-valerolactone, and ε-caprolactone.

The remainder excluding the lithium salt, polymer and other additives in the electrolyte for a secondary battery of the present disclosure may all be non-aqueous organic solvents.

### (3) Additive

The electrolyte for a secondary battery of the present disclosure may have a stable passivation ability on the surface of the positive electrode and may include an additive capable of forming a film having low interface resistance.

The additive may include a polymer or oligomer including a repeating unit derived from a monomer represented by Formula 1 and a repeating unit derived from a monomer represented by Formula 2 below

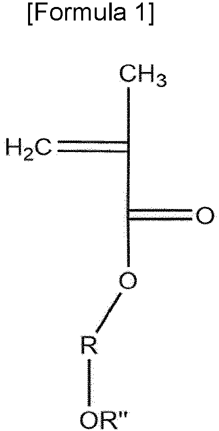

In Formula 1,
R is an alkylene group having 1 to 5 carbon atoms, and
R" is H or Li.

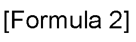

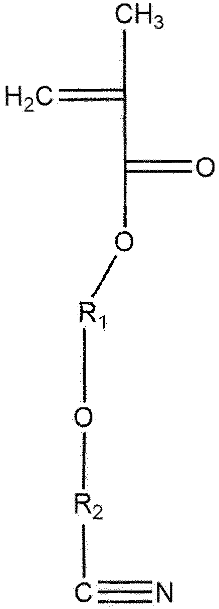

In Formula 2, R₁ and R₂ are each independently an alkylene group having 1 to 5 carbon atoms.

The polymer included as an additive of the present disclosure includes, as essential ingredients, a repeating unit containing a cyano group (CN) capable of easily forming a coordination bond with the metals on the surface of the positive electrode or the metal ions eluted from the positive electrode as a terminal group, and a repeating unit containing a hydroxyl group (-OH) which has an excellent adsorption ability to the transition metals on the surface of the positive electrode as a terminal group. In particular, the polymer of the present disclosure contains a methacrylate group as the main chain unit, thereby forming a more robust film with low fluidity on the electrode surface and capable of coordinating with Li ions, thereby reducing the positive electrode interface resistance. Therefore, the present disclosure may achieve a lithium secondary battery capable of reducing side reactions, and of securing the excellent high-temperature durability and low-temperature resistance property.

In Formula 1 above, R may be an alkylene group having 1 to 4 carbon atoms, and R" may be H. Specifically, R may be an alkylene group having 1 to 3 carbon atoms, and preferably R may be an alkylene group having 1 carbon atom or 2 carbon atoms.

In addition, in Formula 2 above, R₁ and R₂ may be each independently an alkylene group having 1 to 4 carbon atoms, specifically may be each independently an alkylene group having 2 or 3 carbon atoms, and preferably, may be each independently a unsubstituted alkylene group having 2 or 3 carbon atoms

R, R₁ and R₂ may be one in which at least one hydrogen bonded to carbon is substituted with an element other than hydrogen; specifically, with an alkyl group having 1 to 5 carbon atoms.

In addition, the polymer of the present disclosure may additionally include a repeating unit derived from a monomer represented by Formula 3 below.

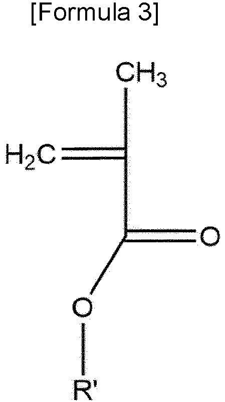

In Formula 3 above, R' is an alkyl group having 1 to 6 carbon atoms.

The polymer of the present disclosure may further improve the solubility in organic solvents by including a repeating unit represented by Formula 3 above containing an alkyl group (R') as a terminal group.

In Formula 3 above, R' may be an alkyl group having 1 to 5 carbon atoms, and preferably may be an alkyl group having 1 to 4 carbon atoms.

R' may be one in which at least one hydrogen bonded to carbon is substituted with an element other than hydrogen; specifically with an alkyl group having 1 to 5 carbon atoms.

The polymer of the present disclosure may include a compound represented by Formula 4 below.

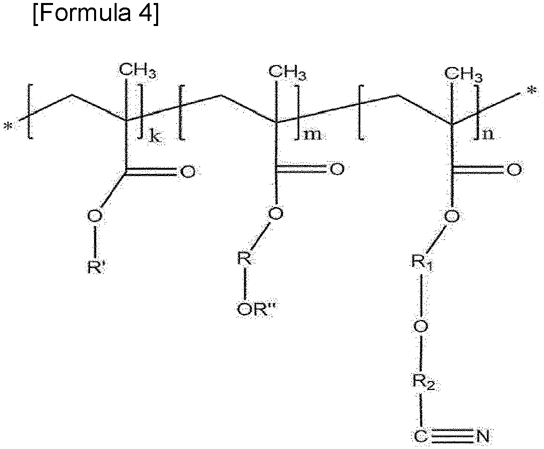

In Formula 4 above,
R, R₁ and R₂ are each independently an alkylene group having 1 to 5 carbon atoms,
R' is an alkyl group having 1 to 6 carbon atoms,
R" is H or Li, k is an integer of 1 to 15,000, m is an integer of 10 to 12,000, and
n is an integer of 10 to 8,500.

Specifically, the compound represented by Formula 4 may include a compound represented by Formula 4a below.

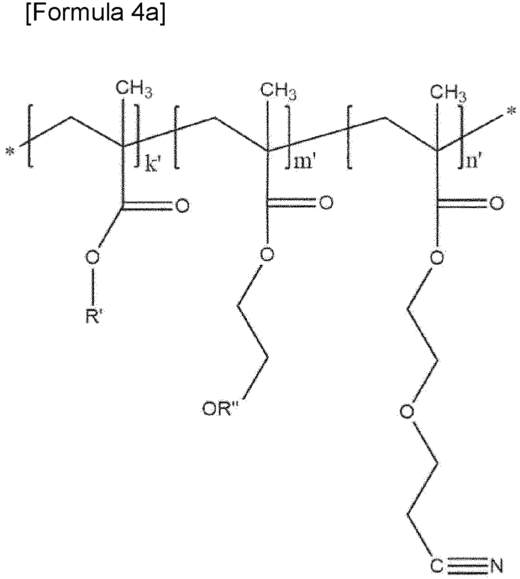

In Formula 4a above,
R' is a substituted or unsubstituted alkyl group having 1 to 6 carbon atoms,
R" is H or Li, k is an integer of 1 to 15,000, m is an integer of 10 to 12,000, and
n is an integer of 10 to 8,500.

More specifically, the compound represented by Formula 4 may include a compound represented by Formula 4a-1 or Formula 4a-2 below.

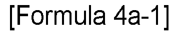

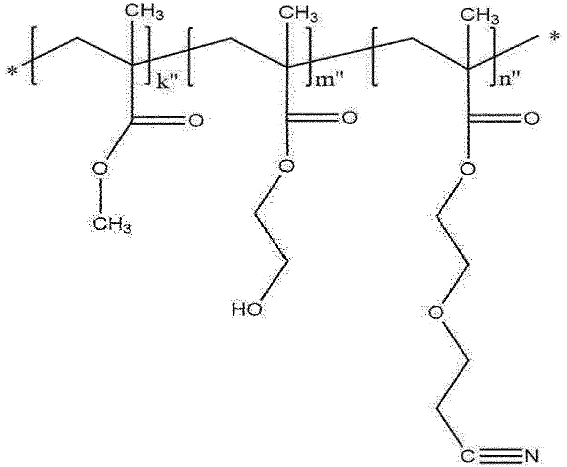

In Formula 4a-1 above,
k" is an integer of 1 to 15,000,
m" is an integer of 10 to 12,000, and
n" is an integer of 10 to 8,500.

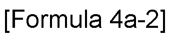

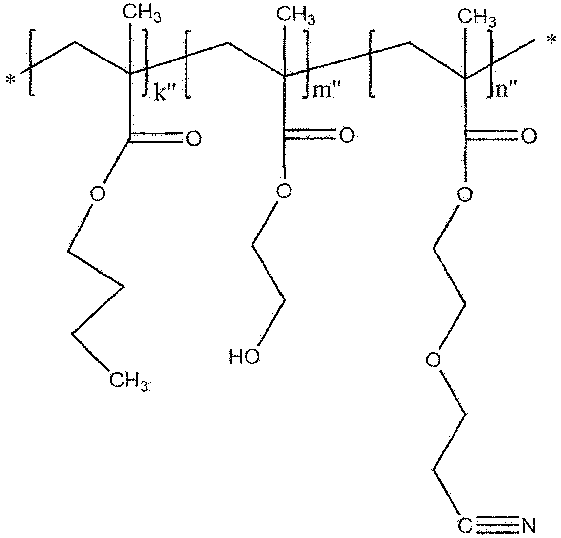

In Formula 4a-2 above,
k" is an integer of 1 to 15,000,
m" is an integer of 10 to 12,000, and
n" is an integer of 10 to 8,500.

In Formula 4 above, a molar ratio of the repeating unit n: (the repeating unit k+the repeating unit m) may be in a range of 1:0.001 to 1:10, specifically 1:0.01 to 1:10, more specifically 1:0.05 to 1:10, and more specifically 1:0.2 to 1:8.

If, in Formula 4 above, the molar ratio of (the repeating unit k+the repeating unit m) to 1 mol of the repeating unit n is less than 0.001, since lithium-ion transfer efficiency is not only reduced but a crosslinking reaction rate for gelation is also reduced, it is difficult to form a stable electrolyte for a secondary battery. Also, since the adhesion between the electrode and the separator is reduced, an effect of improving stability against thermal, mechanical, and electrical shock may be insignificant. Furthermore, in Formula 4 above, if the molar ratio of (the repeating unit k+the repeating unit m) to 1 mol of the repeating unit n is greater than 10, it may be difficult to control a gelation reaction rate.

Furthermore, a molar ratio of the repeating unit k: the repeating unit m may be in a range of 1:0.01 to 1:10, specifically 1:0.02 to 1:9, and more specifically 1:0.02 to 1:5.

**In** Formula 4 above, in a case in which the molar ratio of the repeating unit m to 1 mol of the repeating unit k is less than 0.1, the crosslinking reaction rate for gelation may be reduced. Also, in a case in which the molar ratio of the repeating unit m to 1 mol of the repeating unit k is greater than 10, it may be difficult to control the gelation reaction rate.

A weight-average molecular weight (Mw) of the polymer of the present disclosure may be controlled by the number of repeating units, and specifically may be in a range of 1,500,000 g/mol or less, more specifically 5,000 g/mol to 500,000 g/mol, and more specifically 5,000 g/mol to 400,000 g/mol.

In a case in which the weight-average molecular weight of the polymer is within the above range, the crosslinking reaction may be performed by heating even without a polymerization initiator at a temperature of 60°C. or more, and, simultaneously, the impregnability of the electrolyte for a secondary battery may be improved by controlling the viscosity of the electrolyte for a secondary battery. Particularly, in the case in which the weight-average molecular weight of the polymer is in the range of 5,000 g/mol to 400,000 g/mol, the electrolyte impregnability to the electrode and the separator may be further improved.

The weight-average molecular weight of the polymer of the present disclosure may be measured by using Gel Permeation Chromatography (GPC). For example, a sample having a predetermined concentration is prepared, and Alliance 4, a GPC measurement system, is then stabilized. When the system is stabilized, a standard sample and the sample are injected into the system to obtain a chromatogram, and a molecular weight may then be calculated from the results obtained using an analytical method (system: Alliance 4, column: PL mixed B column by Agilent Technologies, eluent: tetrahydrofuran (THF), flow rate: 0.1 mL/min, temp: 40° C., injection: 100 µL).

Also, the viscosity of the polymer of the present disclosure may be in a range of 4.0 cPs to 100 cPs, more specifically, 4.0 cPs to 20 cPs.

In a case in which the viscosity of the polymer of the present disclosure is within the above range, impregnation characteristics of the electrolyte may be more easily secured. In this case, since it is difficult to secure the impregnation to a large-area and thick electrode when the viscosity of the polymer is 100 cPs or more, it is desirable that the viscosity of the polymer is 100 cPs or less in order to secure the impregnability of the electrolyte over a certain range.

After the polymer was dissolved in the non-aqueous organic solvent at a concentration of 3 wt %, the viscosity was measured at 25° C. with a LV DV-II+ Pro viscometer (cone-plate type) by Brookfield. During the measurement, a spindle was S40, an rpm was 15, and a sample loading amount was 1 mL.

The polymer of the present disclosure may be included in an amount of less than 55 wt %, for example 0.1 wt % to 50 wt %, specifically 0.1 wt % to 30 wt %, more specifically 0.1 wt % to 20 wt %, and more specifically 0.1 wt % to 10 wt %, based on a total weight of the electrolyte for a secondary battery.

If the amount of the polymer of the present disclosure is 0.1 wt % or more, since a gel-forming effect may not only be improved to secure sufficient mechanical strength of the electrolyte for a secondary battery, but the electrolyte for a secondary battery capable of effectively controlling a side reaction with a positive electrode is also formed, a robust film may be formed. Also, if the amount of the polymer is less than 55 wt %, specifically, 50 wt % or less, a side reaction and an increase in resistance due to the excessive amount of the polymer may be prevented, and the wetting properties of the electrolyte for a secondary battery may be improved. If the amount of the polymer in the electrolyte for a secondary battery is 55 wt % or more, ionic conductivity is reduced due to an increase in the viscosity, and battery operation performance is degraded while the resistance is increased. The electrolyte for a secondary battery of the present disclosure may form a liquid electrolyte or a (gel) polymer electrolyte depending on the content range of the polymer.

### (4) Other Additives

Other additives may be included if necessary in order to prevent an electrolyte for a secondary battery from being decomposed to cause collapse of a negative electrode in a high output environment, or further improve low-temperature high-rate discharge characteristics, high-temperature stability, overcharge protection, and a battery swelling suppression effect at high temperatures.

Examples of these other additives may be at least one selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound, for example, may include vinylene carbonate (VC) or vinyl ethylene carbonate.

The halogen-substituted carbonate-based compound, for example, may include fluoroethylene carbonate (FEC).

The sultone-based compound, for example, may include at least one compound selected from 1,3-propane sultone (PS), 1,4-butane sultone, ethane sultone, 1,3-propene sultone (PRS), 1,4-butene sultone, or 1-methyl-1,3-propene sultone.

The sulfate-based compound, for example, may include ethylene sulfate (Esa), trimethylene sulfate (TMS), or methyl trimethylene sulfate (MTMS).

The phosphate-based compound, for example, may include at least one compound selected from lithium difluoro bis(oxalato)phosphate, lithium difluorophosphate tetramethyl trimethylsilyl phosphate, trimethylsilyl phosphate, or tris(2,2,2-trifluoroethyl)phosphate.

The borate-based compound, for example, may include tetraphenylborate or lithium oxalyldifluoroborate.

The nitrile-based compound, for example, may include at least one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

The benzene-based compound, for example, may include fluorobenzene, the amine-based compound may include triethanolamine or ethylenediamine, and the silane-based compound may include tetravinylsilane.

The lithium salt-based compound is a compound different from the lithium salt included in the electrolyte of the present disclosure, wherein the lithium salt-based compound may include at least one compound selected from LiPO₂F₂, LiODFB, LiBOB (lithium bis(oxalato) borate (LiB(C₂O₄)₂)), or LiBF₄.

In a case in which vinylene carbonate, vinyl ethylene carbonate, or succinonitrile, among these other additives, is included, a more robust solid electrolyte interface (SEI) may be formed on the surface of the negative electrode during an initial activation process of the secondary battery.

In a case in which LiBF₄ is included, the high-temperature stability of the secondary battery may be improved by suppressing the generation of gas which may be generated due to the decomposition of the electrolyte during high-temperature storage.

The other additives may be used as a mixture of two or more thereof, and may be included in an amount of 0.01 wt % to 10 wt %, specifically 0.01 wt % to 8 wt %, and preferably 0.05 wt % to 5 wt % based on a total weight of the electrolyte for a secondary battery. If the amount of the other additive is less than 0.01 wt %, the effects of improving low-temperature output, high-temperature storage characteristics, and high-temperature life characteristics of the battery are insignificant, and, if the amount of the other additive is greater than 10 wt %, there is a possibility that side reactions occur excessively during the charge and discharge of the battery due to the excessive amount of the additive. Particularly, since the additives for forming an SEI are added in excessive amounts, they may not be sufficiently decomposed at high temperatures, unreacted materials may be formed in the electrolyte at room temperature, or the additives for forming an SEI may be present in the form of precipitation. Accordingly, side reactions may occur in which the life or resistance characteristics of the secondary battery are degraded.

### Lithium Secondary Battery

Furthermore, the present disclosure provides a lithium secondary battery comprising the electrolyte of the present disclosure.

The lithium secondary battery of the present disclosure may be prepared by a method including the steps of: (a) accommodating an electrode assembly formed by sequentially stacking a positive electrode, a separator, and a negative electrode in a battery case; (b) injecting the electrolyte for a secondary battery of the present disclosure into the battery case; and (c) activating the electrolyte for a secondary battery at 25° C. to 100° C. to form an electrolyte film on the surface of the electrode.

In this case, the step of activating may be performed for about 2 minutes to 48 hours, specifically for 1 hour to 24 hours.

The activating is a step of forming an SEI (Solid Electrolyte Interface) on the surface of the negative electrode by partially charging and discharging, wherein it may be performed by a method known in the art. Specifically, for example, charge and discharge may be performed once or repeatedly in a predetermined range of constant current or constant voltage. Specifically, charge and discharge may be performed once in a voltage range of 2.5 V to 4.8 V. Furthermore, charge for the activation may be performed in a state of charge (SOC) range of 30% to 70%.

The method may further include aging after the step of activating.

The aging stabilizes the battery activated as described above by leaving the battery for a predetermined period of time, wherein the aging may be performed at 19° C. to 25° C.

Those prepared by typical methods and used in the preparation of the lithium secondary battery may all be used without particular limitation as the positive electrode, the negative electrode, and the separator which are used in the lithium secondary battery of the present disclosure.

### (1) Positive Electrode

The positive electrode according to the present disclosure may include a positive electrode active material layer including a positive electrode active material, and, if necessary, the positive electrode active material layer may further include a conductive agent and/or a binder.

A structurally very stable lithium iron phosphate-based positive electrode active material may be used for the positive electrode active material.

The lithium iron phosphate-based positive electrode active material may be represented by Formula I below.

[Formula I] LiFe₁₋ₓMₓPO₄

In Formula I above,
M is any one selected from Mn, Ni, Co, Cu, Sc, Ti, Cr, V or Zn, wherein 0≤x<1.

In Formula I above, M is a metal element capable of improving the structural stability and conductivity of the lithium iron phosphate-based positive electrode active material by substituting Fe, and specifically, may include any one selected from Ni, Co, or Mn, or two or more elements.

In Formula I above, x may be 0≤x≤0.5.

The lithium iron phosphate-based positive electrode active material, in particular, LiFePO₄ having an olivine structure has a high volumetric density of 3.6g/cm³, is able to develop a high potential of 3.4V, and has a high theoretical capacity being approx. 170mAh/g. Furthermore, LiFePO₄ in an initial state includes an electro-chemically undopable Li at a rate of one Li atom per Fe atom, and thus is a promising material as a positive electrode active material for a secondary battery. However, LiFePO₄ has a low bulk ionic conductivity and a low electrical conductivity, which results in low output characteristics due to the high interfacial resistance on the surface. In particular, it has the disadvantage that the Fe ions resulting from the Fe oxide-based impurities are eluted into the electrolyte and then precipitate on the negative electrode surface.

The present disclosure applies an electrolyte containing the polymer containing a cyano group (CN) as a terminal group as an additive to form a coordination bond with the metal ions eluted from the positive electrode, thereby increasing the effect of removing the metal ions, and simultaneously may effectively suppress the elution of the metal ions by forming a functional polymer layer (film) on the surface of the positive electrode. Therefore, the side reactions caused by the eluted metal ions may be resolved.

As the positive electrode active material of the present disclosure, a lithium nickel cobalt manganese-based oxide represented by Formula II below may be further used together in addition to the lithium iron phosphate-based positive electrode active material, if necessary.

[Formula II] Liₓ[Ni_{y}Co_{z}Mn_{w}M¹ᵥ]O₂

In Formula II,
M¹ is a doping element substituted for transition metal sites and may include at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo wherein y+z+w+v=1.

x represents an atomic ratio of lithium to the total transition metals in the lithium nickel cobalt manganese-based oxide, wherein x may be in a range of 0.8 to 1.2, and preferably 1 to 1.2.

y represents an atomic ratio of nickel among the transition metals in the lithium nickel cobalt manganese-based oxide, wherein y is in a range of 0.5 or more to less than 1, preferably, 0.7 to less than 1, and more preferably 0.75 to 0.98. Since higher capacity may be achieved as the amount of the nickel among the transition metals is increased, it is more advantageous for achieving a high capacity that the amount of the nickel is 0.5 or more.

z represents an atomic ratio of cobalt among the transition metals in the lithium nickel cobalt manganese-based oxide, wherein z is in a range of greater than 0 to 0.5 or less, preferably, 0.01 to 0.3, and more preferably 0.01 to 0.25.

w represents an atomic ratio of manganese among the transition metals in the lithium nickel cobalt manganese-based oxide, wherein w is in a range of greater than 0 to 0.5 or less, preferably 0.01 to 0.3, and more preferably 0.01 to 0.25.

v represents an atomic ratio of the doping element M¹ doped into the transition metal sites in the lithium nickel cobalt manganese-based oxide, wherein v may be in a range of 0 to 0.2, preferably 0 to 0.1. In a case in which the doping element M¹ is added, there is an effect of improving the structural stability of the lithium nickel cobalt manganese-based oxide, but, since the capacity may be reduced when the amount of the doping element is increased, it is desirable that the doping element is included at the amount of 0.2 or less.

Specific examples of the lithium nickel cobalt manganese-based oxide may be LiNi_{0.5}Co_{0.2}Mn_{0.3}O₂, Li(Ni_{0.5}Mn_{0.3}CO_{0.2})O₂, Li(Ni_{0.6}Mn_{0.2}Co_{0.2})O₂, Li(Ni_{0.7}Mn_{0.15}CO_{0.15})O₂ or Li(Ni_{0.8}Mn_{0.1}Co_{0.1})O₂, but are not limited thereto.

The positive electrode active material may be included in an amount of 80 wt% to 98 wt%, and more specifically 85 wt% to 98 wt% based on a total weight of the positive electrode active material layer. In a case in which the positive electrode active material is included in the above range, superior capacity characteristics may be exhibited.

Next, the conductive agent may be used to provide the electrode with conductivity, and is not particularly limited as long as it has conductivity without causing adverse chemical changes in the battery. Specific examples thereof are conductive materials, such as: graphite such as natural graphite or artificial graphite; carbon black such as carbon black, acetylene black, Ketjen black, channel black, furnace black, lamp black, or thermal black; conductive fibers such as carbon fibers or metal fibers; metal powder such as copper, nickel, aluminum, silver, etc.; conductive whiskers such as zinc oxide whiskers or potassium titanate whiskers; conductive metal oxide such as titanium oxide; or polyphenylene derivatives, and any one thereof or a mixture of two or more thereof may be used.

The conductive agent may be added in an amount of 0.1 wt% to 10 wt%, and preferably 0.1 wt% to 5 wt%, based on a total weight of the positive electrode active material layer.

The binder improves the adhesion between the positive electrode active material particles and the adhesion between the positive electrode active material and the current collector. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more may be used. The binder is commonly added in an amount of 0.1 wt% to 15 wt%, and preferably 0.1 wt% to 10 wt%, based on a total weight of the positive electrode active material layer.

The positive electrode of the present disclosure as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder and/or the conductive agent in a solvent, rolled and dried, or may be prepared by casting the positive electrode active material layer on a separate support and then laminating a film separated from the support on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

Also, the positive electrode collector may typically have a thickness of 3 µm to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the positive electrode material mixture may be adjusted to have an appropriate viscosity in consideration of a coating thickness of the positive electrode material mixture, manufacturing yield, and workability, and is not particularly limited thereto.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

As the negative electrode active material, various negative electrode active materials used in the art, for example, a carbon-based negative electrode active material, a silicon-based negative electrode active material, or a mixture thereof may be used.

According to an embodiment, the negative electrode active material may include a carbon-based negative electrode active material, and, as the carbon-based negative electrode active material, various carbon-based negative electrode active materials used in the art, for example, a graphite-based materials such as natural graphite, artificial graphite, or Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, the carbon-based negative electrode active material may include at least one of natural graphite or artificial graphite. More preferably, the carbon-based negative electrode active material may include natural graphite and artificial graphite. In a case in which the natural graphite and the artificial graphite are used together, the adhesion with the current collector may be increased to suppress the exfoliation of the active material.

According to another embodiment, the negative electrode active material may include a silicon-based negative electrode active material, and the silicon-based negative electrode active material, for example, may include at least one selected from metallic silicon (Si), silicon oxide (SiOx, where 0<x≤2), silicon carbide (SiC), and a Si-Y alloy (where Y is an element selected from alkali metal, alkaline earth metal, a Group 13 element, a Group 14 element, transition metal, a rare earth element, or a combination thereof, and is not Si). The element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Since the silicon-based negative electrode active material has higher capacity characteristics than the carbon-based negative electrode active material, better capacity characteristics may be obtained when the silicon-based negative electrode active material is further included. However, a negative electrode including the silicon-based negative electrode active material contains more O-rich components in the SEI than a graphite negative electrode, and the SEI containing the O-rich components tends to be more easily decomposed when a Lewis acid, such as HF or PF₅, is present in the electrolyte. Thus, with respect to the negative electrode including the silicon-based negative electrode active material, there is a need to suppress the formation of the Lewis acid, such as HF and PF₅, or remove (or scavenge) the formed Lewis acid in order to stably maintain the SEI. Since the non-aqueous electrolyte according to the present disclosure includes the compound of Formula II containing the N atom acting as a Lewis base and the F atom improving stability of the SEI on the surface of the negative electrode as an additive, it may effectively suppress the decomposition of the SEI when the negative electrode including the silicon-based negative electrode active material is used.

According to another embodiment, the negative electrode active material may include a mixture of a carbon-based negative electrode active material and a silicon-based negative electrode active material.

Specific examples of the carbon-based negative electrode active material and the silicon-based negative electrode active material are the same as described above.

A mixing ratio of the silicon-based negative electrode active material to the carbon-based negative electrode active material may be in a range of 3 : 97 to 99 : 1, preferably 5 : 95 to 30 : 70, and more preferably 5 : 95 to 15 : 85, as a weight ratio. In a case in which the mixing ratio of the silicon-based negative electrode active material to the carbon-based negative electrode active material satisfies the above range, since a volume expansion of the silicon-based negative electrode active material is suppressed while capacity characteristics are improved, the excellent cycle performance may be secured.

The negative electrode active material may be included in an amount of 80 wt% to 99 wt% based on a total weight of the negative electrode active material layer. In a case in which the amount of the negative electrode active material satisfies the above range, the excellent capacity characteristics and electrochemical properties may be obtained.

Next, the conductive agent is a component for further improving conductivity of the negative electrode active material, wherein the conductive agent may be added in an amount of 10 wt% or less, and preferably 5 wt% or less based on a total weight of the negative electrode active material layer. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, or thermal black; conductive fibers such as carbon fibers or metal fibers; metal powder such as copper powder, nickel powder, aluminum powder, silver powder, etc.; conductive whiskers such as zinc oxide whiskers or potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as selectively the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector may typically have a thickness of 3 µm to 500 µm.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of the negative electrode material mixture, manufacturing yield, and workability, and is not particularly limited.

### (3) Separator

Furthermore, the separator plays a role in blocking an internal short circuit between both electrodes and being impregnated with the electrolyte, wherein, after mixing a polymer resin, a filler, and a solvent to prepare a separator composition, the separator composition is directly coated on the electrode and dried to form a separator film, or, after the separator composition is cast on a support and dried, the separator may be prepared by laminating a separator film separated from the support on the electrode surface.

A typically used porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer may be used alone or in a lamination therewith as the separator. Also, a typical porous nonwoven fabric, for example, a nonwoven fabric formed of high melting point glass fibers or polyethylene terephthalate fibers may be used, but is not limited thereto.

In this case, the porous separator may generally have a pore diameter of 0.01 µm to 50 µm and a porosity of 5% to 95%. Also, the porous separator may generally have a thickness of 5 µm to 300 µm.

A shape of the lithium secondary battery of the present disclosure is not particularly limited, but a cylindrical type using a can, a prismatic type, a pouch type, or a coin type may be used.

### Examples

### Example 1.

### (Preparation of Electrolyte for Secondary Battery)

After LiPF₆ was dissolved in a non-aqueous organic solvent, in which ethylene carbonate (EC), dimethyl carbonate (DMC), and ethyl methyl carbonate (EMC) were mixed in a volume ratio of 30:40:30, such that a concentration of the LiPF₆ was 1.0 M, an electrolyte for a secondary battery was prepared by adding 0.5 wt % of the polymer represented by Formula 4a-1 (Molar ratio of k":m":n" is 25:20:55, weight average molecular weight (Mw): 15,000), 2.5 wt% of vinylene carbonate (VC), and 0.5 wt% of 1,3-propane sultone.

### (Secondary Battery Preparation)

A positive electrode active material (LiFePO₄), a conductive agent (carbon black), and a binder (polyvinylidene fluoride:PVDF), were added to N-methyl-2-pyrrolidone (NMP), which is a solvent, at a weight ratio of 94:3:3 to prepare a positive electrode active material slurry (solid content 48 wt%). A 100 µm thick positive electrode collector (Al thin film) was coated with the positive electrode active material slurry, dried, and roll-pressed to prepare a positive electrode.

A negative electrode active material (carbon powder), a binder (PVDF), and a conductive agent (carbon black) were added to NMP, which is a solvent, at a weight ratio of 96:3:1 to prepare a negative electrode active material slurry (solid content: 70 wt%). A 90 µm thick negative electrode collector (Cu thin film) was coated with the negative electrode active material slurry, dried, and roll-pressed to prepare a negative electrode.

After an electrode assembly was prepared by sequentially stacking the positive electrode, the negative electrode and a separator having three layers of polypropylene/polyethylene/polypropylene (PP/PE/PP), the electrode assembly was put in a pouch-type secondary battery case, and the above-prepared electrolyte for a secondary battery was injected and thermally treated at 60°C for 1 hour to prepare a lithium secondary battery comprising the electrolyte for a secondary battery.

### Example 2.

### (Preparation of Electrolyte for Secondary Battery)

After LiPF₆ was dissolved in a non-aqueous organic solvent, in which ethylene carbonate (EC), dimethyl carbonate (DMC), and ethyl methyl carbonate (EMC) were mixed in a volume ratio of 30:40:30, such that a concentration of the LiPF₆ was 1.0 M, an electrolyte for a secondary battery was prepared by adding 1.0 wt % of the polymer represented by Formula 4a-1 (Molar ratio of k":m":n" is 25:20:55, weight average molecular weight (Mw): 15,000), 2.5 wt% of vinylene carbonate (VC), and 0.5 wt% of 1,3-propane sultone.

### (Secondary Battery Preparation)

A lithium secondary battery was prepared in the same manner as in Example 1 except that the above prepared electrolyte for a secondary battery was used.

### Example 3.

### (Preparation of Electrolyte for Secondary Battery)

After LiPF₆ was dissolved in a non-aqueous organic solvent, in which ethylene carbonate (EC), dimethyl carbonate (DMC), and ethyl methyl carbonate (EMC) were mixed in a volume ratio of 30:40:30, such that a concentration of the LiPF₆ was 1.0 M, an electrolyte for a secondary battery was prepared by adding 2.0 wt % of the polymer represented by Formula 4a-1 (Molar ratio of k":m":n" is 25:20:55, weight average molecular weight (Mw): 15,000), 2.5 wt% of vinylene carbonate (VC), and 0.5 wt% of 1,3-propane sultone.

### (Secondary Battery Preparation)

A lithium secondary battery was prepared in the same manner as in Example 1 except that the above prepared electrolyte for a secondary battery was used.

### Example 4.

### (Preparation of Electrolyte for Secondary Battery)

After LiPF₆ was dissolved in a non-aqueous organic solvent, in which ethylene carbonate (EC), dimethyl carbonate (DMC), and ethyl methyl carbonate (EMC) were mixed in a volume ratio of 30:40:30, such that a concentration of the LiPF₆ was 1.0 M, an electrolyte for a secondary battery was prepared by adding 1.0 wt % of the polymer represented by Formula 4a-2 (Molar ratio of k":m":n" is 25:20:55, weight average molecular weight (Mw): 16,000), 2.5 wt% of vinylene carbonate (VC), and 0.5 wt% of 1,3-propane sultone.

### (Secondary Battery Preparation)

A lithium secondary battery was prepared in the same manner as in Example 1 except that the above prepared electrolyte for a secondary battery was used.

### Comparative Example 1.

### (Preparation of Electrolyte for Secondary Battery)

After LiPF₆ was dissolved in a non-aqueous organic solvent, in which ethylene carbonate (EC), dimethyl carbonate (DMC), and ethyl methyl carbonate (EMC) were mixed in a volume ratio of 30:40:30, such that a concentration of the LiPF₆ was 1.0 M, an electrolyte for a secondary battery was prepared by adding 2.5 wt% of vinylene carbonate (VC) and 0.5 wt% of 1,3-propane sultone.

### (Secondary Battery Preparation)

A lithium secondary battery was prepared in the same manner as in Example 1 except that the above prepared electrolyte for a secondary battery was used.

### Comparative Example 2.

### (Preparation of Electrolyte for Secondary Battery)

After LiPF₆ was dissolved in a non-aqueous organic solvent, in which ethylene carbonate (EC), dimethyl carbonate (DMC), and ethyl methyl carbonate (EMC) were mixed in a volume ratio of 30:40:30, such that a concentration of the LiPF₆ was 1.0 M, an electrolyte for a secondary battery was prepared by adding 0.5 wt % of the polymer represented by Formula 5 (the molar ratio of o:p:q is 30:1:59, weight average molecular weight (Mw): 51,000), 2.5 wt% of vinylene carbonate (VC), and 0.5 wt% of 1,3-propane sultone.

### (Secondary Battery Preparation)

A lithium secondary battery was prepared in the same manner as in Example 1 except that the above prepared electrolyte for a secondary battery was used.

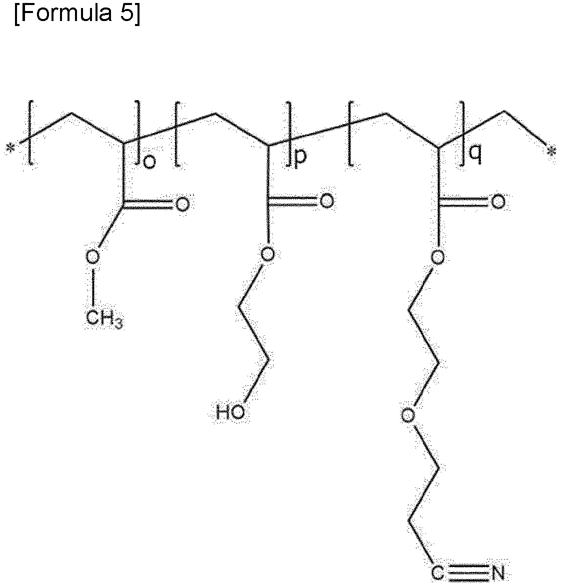

### Experimental Examples

### Experimental Example 1. Evaluation of Resistance Increase Rate after High-temperature Cycles

After the secondary battery prepared in Example 1 and the secondary batteries prepared in Comparative Examples 1 and 2 were respectively charged at a 0.33 C rate under a constant current/constant voltage condition at room temperature (25°C), and were discharged at a 0.33 C rate for 10 sec., the initial resistance was measured by using PNE-0506 charge/discharge equipment (manufacturer: PNE solution), and the results are presented in Table 1 below.

Next, each secondary battery was charged at a 0.33 C rate to 3.20 V under a constant current-constant voltage (CC-CV) condition at high temperatures (45°C), and was then discharged at a 0.33 C rate under a CC condition to 2.5 V, which was set as one cycle. After 300 cycles of charging and discharging, the resistance was measured and the resistance increase rate (%) was then calculated by using Equation 1 below. The calculated resistance increase rates (%) were shown in Table 1 below. Resistance increase rate (%) = {(Resistance after 300 cycles - initial resistance) / initial resistance }×100

### Experimental Example 2: Evaluation of Capacity Retention Rate after High-Temperature Cycle

After the secondary battery prepared in Example 1 and the secondary batteries prepared in Comparative Examples 1 and 2 were respectively charged at a 0.33 C rate under a constant current/constant voltage condition at room temperature (25°C), and were discharged at a 0.33 C rate for 10 sec., the initial discharge capacity was measured by using PNE-0506 charge/discharge equipment (manufacturer: PNE solution).

Next, each secondary battery was charged at a 0.33 C rate to 3.20 V under a constant current-constant voltage (CC-CV) condition at high temperatures (45°C), and was then discharged at a 0.33 C rate under a CC condition to 2.5 V, which was set as one cycle. After 300 cycles of charging and discharging, the discharge capacity was measured and the capacity retention rate (%) was then calculated by using Equation 2 below. The calculated capacity retention rates (%) were shown in Table 1 below. Capacity Retention Rate (%)=(discharge capacity after 300 cycles/initial discharge capacity)×100

**[Table 1]**

| | High-temperature life (after 300 cycles) | | |
|---|---|---|---|
| | Initial Resistance (mohm) | Resistance increase rate (%) | Capacity retention rate (%) |
| Example 1 | -2.06 | 6.4 | 90.8 |
| Comparative Example 1 | 0 | 20.4 | 88.0 |
| Comparative Example 2 | -1.44 | 9.5 | 90.1 |

Referring to Table 1, it may be understood that after 300 cycles at high temperatures the resistance increase rate (%) and capacity retention rate (%) of the secondary battery of Example 1 were improved compared to the secondary batteries prepared in Comparative Example 1 and 2.

### Experimental Example 3. Evaluation of Metal Elution Amount

After disassembling the secondary battery of Example 1, for which the cycle characteristics evaluation was completed in Experimental Example 2 and the secondary batteries of Comparative Examples 1 and 2 to recover the positive electrode plate, each was sealed in 20ml of the electrolyte prepared in Example 1 and was stored in an oven at 45°C for 1 week.

Then, the electrolyte was recovered and the amount of the eluted transition metal (Fe) was measured through an ICP analysis, and the results are shown in Table 2 below.

**[Table 2]**

| | Fe elution amount(ppm) |
|---|---|
| Example 1 | 154 |
| Comparative Example 1 | 375 |
| Comparative Example 2 | 182 |

Referring to Table 2, it may be understood that the amount of the eluted transition metal of the secondary battery of Example 1 was reduced compared to the secondary batteries prepared in Comparative Example 1 and 2.

### Experimental Example 4. Evaluation of Low-temperature Discharge Capacity

After the secondary batteries prepared in Examples 1 to 4 and the secondary batteries prepared in Comparative Examples 1 and 2 were respectively charged at a 0.33 C rate under a constant current/constant voltage condition at room temperature (25°C), and were discharged at a 0.33 C rate for 10 sec., the initial discharge amount was measured by using PNE-0506 charge/discharge equipment (25°C) (manufacturer: PNE solution).

Next, after leaving the batteries at low temperatures (-20°C) for 3 hours, the batteries were charged to 3.2 V under a constant current/constant voltage condition at 1C rate and discharged to 2.5 V under a constant current condition at 1C rate, the discharge capacity retention rates at low temperatures were measured. the results are presented in Table 3 below. At this time, the low-temperature discharge capacity retention rate (%) of the secondary battery in Examples 1 to 4 and Comparative Example 2 were converted into a relative ratio, based on the low-temperature discharge capacity retention rate (%) of the lithium secondary battery of Comparative Example 1, and the results thereof are shown in Table 3 below.

**[Table 3]**

| | Low-temperature discharge capacity retention rate (%) |
|---|---|
| Example 1 | 113.3 |
| Example 2 | 114.5 |
| Example 3 | 115.4 |
| Example 4 | 114.8 |
| Comparative Example 1 | - |
| Comparative Example 2 | 108.2 |

Referring to Table 3, it can be understood that the low-temperature discharge capacity retention rates (%) of the secondary batteries of Examples 1 to 4 of the present disclosure are improved compared to the secondary battery of Comparative Example 2.

## Claims

1. An electrolyte for a secondary battery, comprising
a lithium salt;
a non-aqueous organic solvent; and
a polymer including a repeating unit derived from a monomer represented by Formula 1 and a repeating unit derived from a monomer represented by Formula 2: 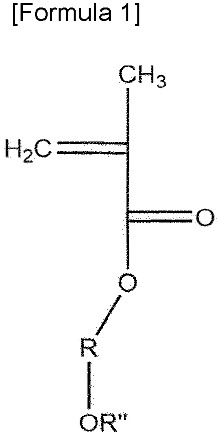
wherein in Formula 1,
R is an alkylene group having 1 to 5 carbon atoms, and
R" is H or Li. 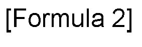 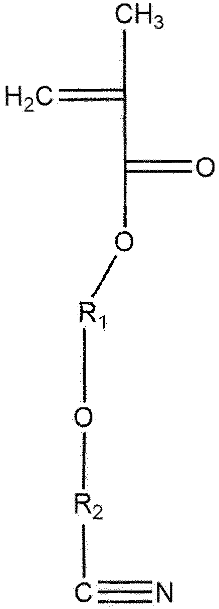
wherein in Formula 2, R₁ and R₂ are each independently an alkylene group having 1 to 5 carbon atoms.

2. The electrolyte for a secondary battery of claim 1, wherein the lithium salt includes LiPF₆

3. The electrolyte for a secondary battery of claim 2, wherein the lithium salt further includes at least one selected from LiCl, LiBr, Lil, LiBF₄, LiClO₄, LiB₁₀Cl₁₀, LiAlCl₄, LiAlO₄, LiCF₃SO₃, LiCH₃CO₂, LiCF₃CO₂, LiAsF₆, LiSbF₆, LiCH₃SO₃, LiTFSI (lithium (bis)trifluoromethanesulfonimide, LiN(SO₂CF₃)₂), LiFSI (Lithium bis(fluorosulfonyl)imide, LiN(SO₂F)₂) or LiBETI (lithium bisperfluoroethanesulfonimide, LiN(SO₂CF₂CF₃)₂).

4. The electrolyte for a secondary battery of claim 1, wherein in Formula 1, R is an alkylene group having 1 to 4 carbon atoms, and R" is H.

5. The electrolyte for a secondary battery of claim 1, wherein in Formula 1, R is an alkylene group having 1 to 3 carbon atoms.

6. The electrolyte for a secondary battery of claim 1, wherein in Formula 1, R is an alkylene group having 1 carbon atom or 2 carbon atoms.

7. The electrolyte for a secondary battery of claim 1, wherein in Formula 2, R₁ and R₂ are each independently an alkylene group having 1 to 4 carbon atoms.

8. The electrolyte for a secondary battery of claim 1, wherein in Formula 2, R₁ and R₂ are each independently an alkylene group having 2 or 3 carbon atoms.

9. The electrolyte for a secondary battery of claim 1, wherein the polymer further includes a repeating unit derived from a monomer represented by Formula 3 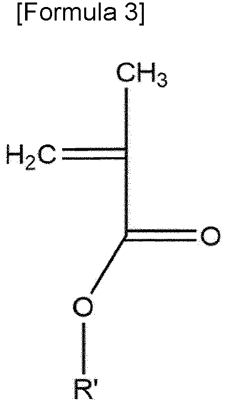 wherein in Formula 3,
R' is an alkyl group having 1 to 6 carbon atoms

10. The electrolyte for a secondary battery of claim 9, wherein in Formula 3, R' is an alkyl group having 1 to 5 carbon atoms.

11. The electrolyte for a secondary battery of claim 9, wherein in Formula 3, R' is an alkyl group having 1 to 4 carbon atoms.

12. The electrolyte for a secondary battery of claim 1, wherein the polymer includes a unit represented by Formula 4 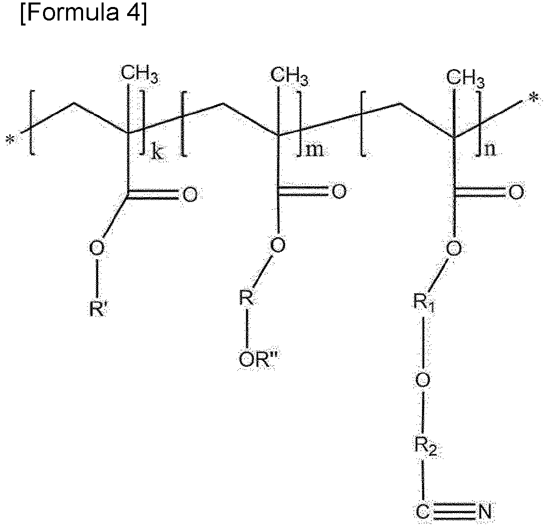 in Formula 4,
R, R₁ and R₂ are each independently an alkylene group having 1 to 5 carbon atoms,
R' is an alkyl group having 1 to 6 carbon atoms,
R" is H or Li,
k is an integer of 1 to 15,000,
m is an integer of 10 to 12,000, and
n is an integer of 10 to 8,500.

13. The electrolyte for a secondary battery of claim 1, wherein the polymer is included in an amount of 0.1 wt % to 50 wt% based on a total weight of the electrolyte for a secondary battery.

14. A lithium secondary battery comprising a positive electrode, a negative electrode, a separator interposed between the positive electrode and the negative electrode, and the electrolyte for a secondary battery of claim 1.

15. The lithium secondary battery of claim 14, wherein the positive electrode includes a lithium iron phosphate-based positive electrode active material represented by Formula I:
[Formula I] LiFe₁₋ₓMₓPO₄
wherein in Formula I, M is any one selected from Mn, Ni, Co, Cu, Sc, Ti, Cr, V or Zn, wherein 0≤x<1.
